# EUROPEAN PATENT SPECIFICATION

(11) **EP 4 033 920 B1**
(45) Date of publication and mention of the grant of the patent: **17.12.2025**
(21) Application number: 20786252.5
(22) Date of filing: 24.09.2020
(51) Int. Cl.: A23L 29/212, C08B 1/00, C08B 30/00, C08L 3/00

(54) **PROCESS FOR THE PREPARATION OF PREGELATINIZED STARCH AND/OR PREGELATINIZED FLOUR**
VERFAHREN ZUR HERSTELLUNG VON VORGELATINISIERTER STÄRKE UND/ODER VORGELATINISIERTEM MEHL UND AUS DIESEM VERFAHREN ERHÄLTLICHE VORGELATINISIERTE STÄRKEN ODER MEHLE
PROCÉDÉ DE PRÉPARATION D'AMIDON PRÉGÉLATINISÉ ET/OU DE FARINE PRÉGÉLATINISÉE ET AMIDON PRÉGÉLATINISÉ ET/OU FARINE PRÉGÉLATINISÉE POUVANT ÊTRE OBTENUS PAR CE PROCÉDÉ

(30) Priority: 24.09.2019 EP 19199285
(43) Date of publication of application: 03.08.2022
(73) Proprietor: Beneo, Remy, 3018 Leuven-Wijgmaal (BE)
(72) Inventor: LEVECKE, Bart, 2860 Sint-Katelijne-Waver (BE); DE VLEESCHOUWER, Kristel, 1910 Buken (BE)
(74) Representative: Koster, Nico
(86) International application number: PCT/EP2020/076781
(87) International publication number: WO 2021/058680

(56) References cited:
- EP-A1- 0 108 833
- WO-A1-96/22311
- US-A- 3 607 394
- US-A- 5 718 770
- US-A- 6 010 574

## Description

### Field of Invention

The field of the invention relates to a process for the preparation of pregelatinized starch and/or pregelatinized flour.

### Background

Starches and/or flours are widely used in the food manufacturing industry for processing, and as food thickeners or stabilizers. Processes for pregelatinizing starch and/or flour are generally known. Native starch granules are insoluble in cold water. When native granules are dispersed in water and cooked, they become hydrated and swell. The pregelatinized starch and/or pregelatinized flour is dried before being packed and transported. Pregelatinized starch and/or flour may readily be dissolved in cold water.

Pregelatinized starch and/or flour may be derived from native starch and/or flour, from chemically crosslinked starch and/or flour, and from physically modified starch and/or flour. The term physically modified starch and/or flour includes starches and/or flours that have been subjected to a heat/moisture treatment, to annealing, to thermal inhibition, and the like. As meant herein the term physically modified does not encompass pregelatinization.

Chemically modified and physically modified starches and/or flours are known to provide a high process tolerance, which makes them suitable as food thickeners or stabilizers under more extreme process conditions.

However, it has been found that known pregelatinized starches and/or flours may lose some or all of their beneficial high viscosity properties when a gel prepared from said pregelatinized starch or flour has been subjected to a high level of shear. Such a high level shear process may, for example, occur during preparation of food products.

### Summary

Therefore, there is still a need for an improved process for the preparation of pregelatinized starch and/or pregelatinized flour.

There is also a need for improved pregelatinized starches and/or pregelatinized flours.

According to a first aspect of the invention there is provided a process for the preparation of pregelatinized starch and/or pregelatinized flour, comprising the steps of:
- Providing an aqueous medium having a pH in the range of -1.0 to 7.5, preferably 1.0 - 5.0;
- Mixing starch and/or flour with the aqueous medium in a mixing step to form a starch composition having a pH in the range of between 4.0 and 6.5, wherein the starch composition has the aqueous medium as continuous phase and contains between 20 and 60 wt.%, preferably between 30 and 50 wt.%, expressed as percentage of dry matter on total weight of the starch composition, of particles of starch and/or flour; and
- Pregelatinizing the starch composition in a pregelatinization step, wherein said composition is heated using a drum dryer, while rotating the drum, to form the pregelatinized starch and/or pregelatinized flour; wherein during the pregelatinization step the starch composition is dried using the drum dryer;
- Allowing the pregelatinized starch and/or pregelatinized flour to cool to a temperature of at most 80ºC; and
- Storing the obtained pregelatinized starch and/or pregelatinized flour at a temperature of at most 60ºC.

As result of the process of the invention pregelatinized starch and/or flour is obtainable which may be native, physically modified or chemically modified; the starch or flour preferably is a rice starch and/or rice flour.

As result of the process of the invention a pregelatinized rice starch and/or pregelatinized rice flour is obtainable, wherein the pregelatinized rice starch and/or pregelatinized rice flour is physically modified, characterized by a tan δ value of at most 0.99, wherein said tan δ value is measured on a gel with pH 3.6 obtained from said starch and/or flour, that was subjected to consecutive mixing steps at room temperature of 8 minutes at 1200 rpm, 5 minutes at 900 rpm and 5 minutes at 300 rpm, and a shear rate application step during 1 minute at between 3000 and 9000, preferably at 5000 rpm, wherein said tan δ is measured using an amplitude sweep at deformation from 0.01% to 1000% at frequency 1 Hz.

In specific examples, the pregelatinized rice starch and/or pregelatinized rice flour is physically modified is characterized by a tan δ value of at most 0.35 for a pregelatinized rice starch and characterized by a tan δ value of at most 0.55 for a pregelatinized rice flour,

It has been found by the inventors in the investigations leading to the present invention that when mixing the starch and/or flour with the aqueous medium to form a starch composition the pH of the resulting starch composition is important for obtaining a pregelatinized starch and/or pregelatinized flour having improved properties such as for example a high shear stability. The pH of the starch composition is controlled to be in the range of 2.0 to 7.9. It has surprisingly be found that, when the pH of the - aqueous - starch composition is controlled to be in the range of 2.0 to 7.9 before pregelatinizing the starch composition, the gels and other compositions comprising the resulting pregelatinized starch and/or pregelatinized flour can have improved properties such as for example enhanced high shear stability and a more elastic structure / texture. This can enable a reduction in the amount of pregelatinized starch and/or pregelatinized flour to achieve a predefined viscosity.

The drum-dried pregelatinized starch and/or pregelatinized flour is allowed to cool to a temperature of at most 80ºC, and the obtained pregelatinized starch and/or pregelatinized flour at a temperature of at most 60ºC, preferably at a temperature in the range between -10ºC and +50ºC, even more preferably at a temperature in the range between -10ºC and +40ºC. As such, the improved properties of the obtained pregelatinized starch and/or pregelatinized flour are maintained in an appropriate way during storage and up to processing the pregelatinized starch and/or pregelatinized flour as a food or feed ingredient.

In a preferred embodiment the pH of the starch composition of the slurry during the pregelatinization step is chosen to be lower than the pH of the starch and/or flour as such. Such pH is dependent on the type of starch. For thermally inhibited starches such pH can be alkaline, for instance above 8.0. For native starches, the pH of the starch and/or flour is typically in the range of 5-7. For chemically modified starches, the pH will depend on the chemical modification. The pH may further depend on the type of starch, as well as process conditions of the inhibition or modification.

In the mixing step of the invention, the starch and/or flour is mixed with an aqueous medium to form a starch composition, which is an -aqueous- starch composition. The term starch composition as meant herein has the meaning of a composition comprising at least one a starch and/or flour.

The term starch composition as meant herein has the meaning of a slurry having an aqueous liquid as continuous phase and containing solid particles of starch and / or flour. Typically, the starch composition is able to flow and being transported in similar fashion as a liquid when being at a temperature between 5°C and 55°C. Such starch composition can be subjected to one drying steps, as a consequence of which the aqueous starch composition becomes a dried starch composition.

The maximum weight percentage of solid particles that can be comprised in the starch composition while still maintaining the characteristics of flowability and transportability will - as is known - depend on the precise nature of the particles. It is preferred that the solids content of the starch composition lies between 20 and 60 wt.%, between 25 and 55 wt.%, between 30 and 50 wt.%, more preferably between 35 and 45 or 40 wt.%.

The aqueous medium may have additional constituents in addition to water. Other compounds besides water may be present, and indeed will be in case of for example an industrial application of the invention where use is made of process water or other on-site available and suitable water streams. It is however preferred that the aqueous phase is essentially free, preferably free of other solvents such as ethanol. The aqueous phase preferably contains at least 80, 85, 90, or even at least 95, 96, 97, or 98 wt.% water. In an embodiment of the invention, the aqueous phase consists essentially of water, or even consists of water.

The temperature of the aqueous phase can vary within a wide range, and is preferably between 5 and 50°C, more preferably between 10 and 30°C or even between 15 and 25°C.

In the pregelatinizing step the starch composition is heated using a drum dryer to form the pregelatinized starch and/or pregelatinized flour, while rotating the drum. During the pregelatinization step the starch composition is dried using the drum dryer. Preferably, in the pregelatinization step, said starch composition is heated using a drum dryer by the application of steam to the drum dryer.

Drum dryers are as such known to the person skilled in the art; furthermore it is also known that pregelatinization as well as drying can occur both during one pass on the drum dryer. It has been found by the inventors that using the drum dryer in combination with the other features of the present invention to form the pregelatinized starch and/or pregelatinized flour, the resulting pregelatinized starch and/or pregelatinized flour may show improved properties such as for example a relatively high cold viscosity and an enhanced high shear stability.

Principally, the starch and/or flour used may be any type of starch.

In preferred embodiments, the process comprises at least one of a physical modification step and a chemical modification step prior to the mixing step wherein the starch and/or flour is physically modified or chemically modified and wherein the starch and/or flour used in the mixing step is the physically modified starch and/or flour or the chemically modified starch and/or flour.

In one preferred embodiment, the starch is physically modified, preferably thermally inhibited. In said embodiment, the process comprises a physical modification step prior to the mixing step, wherein the physical modification step is a thermal inhibition step for thermally inhibiting a starch and/or flour, and wherein the starch and/or flour used in the mixing step is the thermally inhibited starch and / or thermally inhibited flour. The starch composition formed in the mixing step has a pH in the range between 4.0 and 6.5.

In alternative preferred embodiments, the starch and/or flour is a chemically modified starch and/or flour. In said embodiment, the process comprises a chemical modification step for chemically modifying a starch and/or flour prior to the mixing step, wherein the starch and/or flour used in the mixing step is the chemically modified starch and / or chemically modified flour. The starch composition formed in the mixing step has a pH in the range between 4.0 and 6.5.

Chemically modified starch and/or flour can be obtained via for example chemical crosslinking. Chemical crosslinking processes of starch and/or flour are known in the state of the art.

Generally known chemical modification processes for chemically modifying a starch and/or flour include, but are not limited to, the following:
- Crosslinking reactions such as using any one of phosphorus oxychloride, trimetaphosphate, and a mixture of adipic and acetic anhydride.
- Substitution reactions such as any one of acetylation, octenylsuccinylation, phosphorylation, and hydroxypropylation; and
- Conversion reactions, such as any one acid hydrolysis, oxidation and bleaching, pyroconversion, and enzyme conversion.

In even other embodiments, the starch and/or flour is selected from a native starch and/or flour. The term "native" starch as meant herein has the meaning of a starch as it is found in nature.

Most preferably, the starch and/or flour is derived from a waxy starch and/or waxy flour. It has been found that waxy variants of starch and/or flour can provide beneficial properties.

In embodiments, the starch and/or flour may comprise maize *(i.e. corn),* wheat, rice, sorghum, barley, rye, tapioca, potato and any mixtures thereof.

Preferably, the starch and/or flour is selected from maize *(i.e. corn),* wheat, rice, sorghum, barley, rye, and any mixtures thereof.

In a preferred embodiment, the starch and/or flour is derived from rice, preferably a waxy rice.

In an embodiment, the process comprises a thermal inhibition process prior to the mixing step and the starch and/or flour used in the mixing step is the thermal inhibited starch and / or thermally inhibited flour. When a thermally inhibited starch or flour is mixed with water, the pH of the resulting starch composition often lies higher than 7.0 or 8.0. The tendency towards having a alkaline pH of the starch composition is assumed to be caused by the typical thermal inhibition process conditions for thermally inhibiting the starch or flour; i.e. using high temperature (such temperatures lying between 100 and 200ºC) and alkaline pH conditions. It was discovered by the inventors that the changes to the starch and/or flour as achieved by thermal inhibition can be at least partially undone if the pH of the said starch composition is not lowered according to the invention.

The preparation of thermally inhibited starch and/or of thermally inhibited flour is as such known. Thermally inhibited starch and thermally inhibited flour have as an advantage that they are generally not regarded as chemically modified starch or chemically modified flour, do not need to be labelled with a European Union 'E' number or equivalent, and can thus be part of a 'clean label' approach to food product ingredients.

As is known, thermal inhibition of starch comprises a heat treatment at temperatures lying between 100 and 200°C. In a preferred embodiment the thermal inhibition is executed at an alkaline pH - at a pH above 8.0 - whereby it is ensured that the starch has a moisture content below 1 wt.%. Consequently, upon completion of the thermal inhibition the moisture content of the thermally inhibited starch may be, and in a preferred embodiment is, below 1 wt.%.

As is known, thermal inhibition of flour comprises a heat treatment at temperatures lying between 100 and 200°C.

Upon having been initially prepared, thermally inhibited starch and thermally inhibited flour have a moisture content below their equilibrium value, typically significantly below their equilibrium value. As meant herein, the equilibrium moisture content is the value at 21°C and 50 % relative humidity.

In one preferred embodiment, the required pH of the starch composition is achieved by providing an acidic aqueous medium, prior to it entering the mixing step. The pH of the aqueous medium is for instance chosen in the range between -1.0 and 7.5 or between 1.0 and 5.0. The desired pH value of the aqueous medium can be established via routine experimentation using a small sample of the starch and/or flour concerned. Most preferably, the pH of the aqueous medium is determined such that no further pH adjustment is necessary. In case of a thermally inhibited starch and/or thermally inhibited flour having a significant alkalinity it can prove to be necessary that the pH of the aqueous medium is brought to a value lower than 2.0.

However, in a further embodiment the pH of the starch composition is brought to a desired value subsequent to the bringing together of the aqueous medium and the starch and/or flour. In this embodiment in the mixing step the pH of the starch composition is brought to a value between 4.0 and 6.5 within 90 minutes, preferably within 60 or 30 or 15 minutes, more preferably within 10 minutes after the mixing of the starch and/or flour with the aqueous medium.

In general it is quite possible and sometimes preferred that an acidic aqueous composition is added to the starch and/or flour or to the starch composition in order to further adjust and optimise towards desired values.

Adjustments of pH are as such well known to the person skilled in the art and can be achieved by for example the addition of a base such as sodium hydroxide or an acid such as sulphuric acid and citric acid or by means of a buffer such as a citrate buffer and a phosphate buffer.

As used herein, the pH of solid materials like starch and/or flour is determined at 21°C and as follows: 10 g of dry test material to be measured is added to a beaker containing 100 ml of demineralised water, followed by stirring. The pH of the suspension is then measured by using a standard pH measuring device which has been calibrated. The pH as measured is deemed to be the pH of the test material. The pH of the starch composition according to the invention is preferably at least 2.0 in order to prevent that glycosidic bonds between the saccharide moieties of the starch are hydrolysed, a process which is known to occur at an accelerated pace at pH values below 2.0. More preferably the pH of the starch composition is at least 2.5, 3.0, 3.5, or even at least 4.0.

The pH of the starch composition according to the invention should be between 4.0 and 6.5. It has been found that by controlling the pH of the starch composition to be lower than 7.5, preferably lower than 6.5, the shear stability of the pregelatinized starch and/or pregelatinized flour can be at least maintained or even enhanced. More preferably the pH of the starch composition is at most 6.4, 6.3, 6.2, 6.1. or even at most 6.0.

In an embodiment, the starch and/or flour is heated in the pregelatinizing step by the application of steam to the drum dryer. The advantage is a controlled heating of the starch composition on the drum dryer.

In an embodiment, the pregelatinizing step is performed such that the obtained pregelatinized starch and/or pregelatinized flour has a moisture content lying between 0 wt.% and 30 wt.%, preferably between 2 wt.% and 20 wt.%, more preferably between 3 and 15 wt.%. The pregelatinizing step is performed using a drum dryer. Conditions of the pregelatinizing step using the drum dryer can be suitably selected to dry the pregelatinized starch and/or pregelatinized flour.

In specific examples, the resulting pregelatinized starch and/or flour is characterized by a tan δ value of at most 0.99, wherein said tan δ value is measured on a gel with pH 3.6 obtained from said starch and/or flour, that was subjected to consecutive mixing steps at room temperature of 8 minutes at 1200 rpm, 5 minutes at 900 rpm, 5 minutes at 300 rpm and 1 minute at 5000 rpm, wherein said tan δ is measured using an amplitude sweep at deformation from 0.01% to 1000% at frequency 1 Hz. It has been understood by the inventors that the tan δ value (loss tangent) as measured after the high shear condition is a critical measure for the high shear stability of the pregelatinized starch and/or flour. The tan δ provides a ratio between elastic properties and viscous properties of the starch. With a tan δ of 1, the elastic and viscous properties are equal. The smaller the loss tangent, the more elastic the starch material.

In a specific examples, the pregelatinized starch is rice starch, and even more preferred thermally inhibited rice starch. This material is characterized in that said gel has a shear-dependent viscosity ( 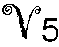 ) of at least 2,000 mPa.s measured at 20 ºC and shear rate of 0.88 s-1 after applying to said gel consecutive mixing steps at room temperature of 8 minutes at 1200 rpm, 5 minutes at 900 rpm and 5 minutes at 300 rpm, and a shear rate application step during 1 minute at 5000 rpm. It has been found that the shear-dependent viscosity ( 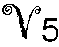 ) of at least 2,000 mPa.s is a beneficial property for the use of the pregelatinized rice starch in food production.

In a specific example of the obtained pregelatinized rice starch, said gel has a tan δ value of at most 0.30 and a shear-dependent viscosity ( 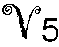 ) of at least 11,000 mPas.

In a preferred embodiment of the pregelatinized rice starch and/or pregelatinized rice flour, the pregelatinized rice starch and/or pregelatinized rice flour is obtainable according to the process according to the invention.

As result of the process of the invention a pregelatinized rice starch and/or pregelatinized rice flour can be obtained, wherein the pregelatinized rice starch and/or pregelatinized rice flour is thermally inhibited prior to the pregelatinization step, wherein an inhibition level of the pregelatinized rice starch and/or pregelatinized rice flour is similar to the inhibition level of the originally thermally inhibited starch or thermally inhibited flour used for the pregelatinization step. Said inhibition level of the specific starch or flour may be indicated by a viscosity and/or by a tan δ value of said starch or flour. In specific examples, the tan δ value of the pregelatinized thermally inhibited rice starch and/or pregelatinized thermally inhibited rice flour obtained according to the process of the invention is at most 20% higher, preferably is at most 10% higher, even more preferably has at most an equal tan δ value, most preferably is at least 10% lower, compared to the same thermally inhibited starch and /or thermally inhibited flour which has not been pregelatinized, wherein said tan δ value is measured on a gel with pH 3.6 obtained from said starch and/or flour, that was subjected to consecutive mixing steps at room temperature of 8 minutes at 1200 rpm, 5 minutes at 900 rpm and 5 minutes at 300 rpm, and a shear rate application step during 1 minute at 5000 rpm, wherein said tan δ is measured using an amplitude sweep at deformation from 0.01% to 1000% at frequency 1 Hz.

As used herein, the terms 'essentially', 'consist(ing) essentially of', 'essentially all' and equivalents thereof have, unless noted otherwise, in relation to a composition or a process step the usual meaning that deviations in the composition or process step may occur, but only to such an extent that the essential characteristics and effects of the composition or process step are not materially affected by such deviations.

The starch and/or flour may constitute the entirety of any solid materials as used in the mixing step, or it may be present in the form of a mixture with other compounds. In case of a mixture, the starch and/or flour is the largest dry matter constituent in the mixture, preferably representing at least 40, 50, 60, 70, 80, 90, or at least 95% of the mixture entering the mixing step. Examples of possible other compounds in the mixture are: other carbohydrates, proteins, and lipids.

Upon completion of the pregelatinization step, the pregelatinized starch and/or pregelatinized flour is typically recovered and processed further, for example by packaging the pregelatinized starch and/or pregelatinized flour.

The industrial implementation of the process of the invention can be in the form of a batch process, in the form of a continuous process, or in a mixed form thereof.

### Examples

### Preparation of a gel

Certain properties of the starch or flour were determined by preparing a gel with the starch or flour. The experiments shown in Comparative Experiment A and B and Examples 1 and 2 are performed using a thermally inhibited rice starch. Experiments shown in Comparative Experiment C and D and Examples 3 - 5 are performed using another thermally inhibited rice starch. Said other thermally inhibited rice starch has a lower level of inhibition than the inhibition level of the thermally inhibited rice starch of experiments C, D, 1 and 2.

The experiments shown in Comparative Experiment E and F and Examples 6 and 7 are performed using a thermally inhibited corn starch.

The experiments shown in Comparative Experiment G and H and Examples 8 and 9 are performed using a chemically modified waxy rice starch.

The experiments shown in Comparative Experiment I and J and Example 10 are performed using a thermally inhibited rice flour.

The gel of a non-pregelatinized starch or non-pregelatinized flour was prepared in a Stephan UMSK 5 cooker equipped with a mixing insert having two rounded blades, using 135 g (dry matter) starch or 225 g (dry matter) flour. In a next step citric acid and trisodium citrate were used to acidify and buffer water to pH 3.6, and sufficient water to obtain a total weight of 2,500 g, whereby the citric acid and trisodium citrate were combined with the water before the starch was added.

The gel of a non-pregelatinized starch or non-pregelatinized flour was further prepared by heating the starch composition during 4.5 minutes at 94°C via indirect heating of the double jacket of the Stephan UMSK 5 cooker at a steam pressure of 0.6 bar, while simultaneously mixing at 300 rpm. The obtained gel was cooled to 25°C prior to applying further steps including an intensive shearing step on the gel as described below.

The gel of a pregelatinized starch or pregelatinized flour was prepared in a Stephan UMSK 5 cooker equipped with a mixing insert having two rounded blades, using 135 g (dry matter) starch or 225 g (dry matter) flour. In a next step 250g of ethylene glycol (10 wt-% relative to the total weight of the solution) was added to the dry matter starch or flour prior to adding the water or other components. Citric acid and trisodium citrate were used to acidify and buffer the water to pH 3.6, and sufficient water to obtain a total weight of 2,500 g, whereby the citric acid and trisodium citrate were combined with the water before adding this to the starch or flour. The application of ethylene glycol was only applied to Comparative Experiment D, F, H and J as well as to Examples 3 to 10.

A homogeneous gel of a pregelatinized starch or flour was obtained by subjecting the mixture to 3 consecutive mixing steps in the Stephan UMSK 5 at room temperature during 8 min at 1200rpm, 5 min at 900rpm and 5 min at 300rpm.

Thereafter, 500mL portion of the obtained gel was subjected to an intensive shearing step by means of a Silverson L4RT mixer using a square hole (2.4 mm) high shear screenmixer head during 1 min at the specified shearing rate (rpm). The selection of rpm for the intensive shearing step is done based a.o. on the nature of the gel; thus, in further examples herein below it may be that another rpm is chosen in order to obtain the most meaningful insight into material behaviour. The rpm as used for the intensive shearing step - always during one minute - will be reflected in the notation of viscosity parameter 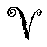 by means of a subscript, whereby 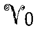 indicates no intensive shearing step (i.e. rpm is 0), 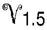 indicates an rpm of 1,500, 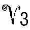 indicates an rpm of 3,000, 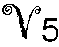 indicates an rpm of 5,000, 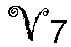 indicates an rpm of 7,000 etc. The sheared gel is allowed to rest overnight at a temperature of 4°C.

### Measurement of viscosity properties

The viscosity and tan δ of a gel, made from the starch concerned, that had first been subjected to an intensive shear step, were determined at a temperature of 20°C by means of an Anton Paar Rheometer (parallel plate-plate configuration; the plate diameter was 40 mm). As meant herein, the term tan δ is used in its common meaning of being a loss tangent in the linear viscoelastic region. It gives a ratio between viscous and elastic properties of a system, showing which one is the dominant one. With a tan δ value of 1, the elastic and viscous properties of the material are equal. The smaller the loss tangent is, the more elastic is the material. The viscosity at 0.88 s⁻¹ was determined in a viscosity curve measurement wherein the shear rate varied from 0.1 to 100 s⁻¹ according to a logarithmic ramp with 20 measuring points.

The tan δ was determined from the LVR range obtained via an amplitude sweep measurement having the following characteristics: deformation from 0.01 to 1000% according to a logarithmic ramp with 6 measuring points per decade.

In the Examples and Comparative Experiments herein, the tan δ and viscosity are always determined on a gel that has first been subjected to shear forces as described above, at the rpm as indicated per Example or Comparative Experiment.

### Comparative Experiment A

The properties of the thermally inhibited waxy rice starch as such, which was the raw material as used in Comparative Experiment B and Examples 1 - 2 herein below, were measured without the starch having been subjected to any subsequent process step, such as slurrying.

The starch had 7.0 wt.% moisture content. The starch had a pH of 8.3 (determined on a 10 wt.% solution of the starch in demineralised water). The viscosity properties were determined to be:

| | |
|---|---|
| 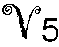 | 14,500 mPa.s |
| tan δ | 0.29 |

### Comparative Experiment B

A sample of the thermally inhibited waxy rice starch as was used in Comparative Experiment A was used to form a slurry, using demineralized water as aqueous medium. The resulting slurry contained 30 wt.% particles of thermally inhibited waxy rice starch expressed as percentage of dry matter of the thermally inhibited waxy rice starch based on total weight of the slurry. The slurry had a pH of 8.0. The slurry was subsequently de-watered on a drum dryer (single drum-dryer of Andritz, type E5/5) using conditions of 5.5 bar of steam and 5 rpm to form a slurried-dried starch having 4.4 wt.% moisture content.

The slurried-dried starch had a pH of 8.3 (determined on a 10 wt.% solution of the starch in demineralised water).

The viscosity properties were determined to be:

| | |
|---|---|
| 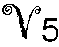 | 9,750 mPa.s |
| tan δ | 0.36 |

### Reference Example 1

A sample of the thermally inhibited waxy rice starch as was used in Comparative Experiment A was used to form a starch composition, using demineralized water acidified with sulfuric acid prior to contact with rice starch to pH 2.5 as aqueous medium. The resulting starch composition had a pH of 7.3 and contained 30 wt.% particles of thermally inhibited waxy rice starch expressed as percentage of dry matter of the thermally inhibited waxy rice starch based on total weight of the starch composition.

The starch composition was subsequently dried on a drum dryer using conditions of 5.5 bar of steam and 5 rpm to form a pregelatinized starch having 4.6 wt.% moisture content.

The pregelatinized starch had a pH of 7.7 (determined on a 10 wt.% solution of the starch in demineralised water).

The viscosity properties were determined to be:

| | |
|---|---|
| | 11,900 mPa.s |
| 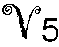 tan δ | 0.28 |

### Example 2

A sample of the thermally inhibited waxy rice starch as was used in Comparative Experiment A was used to form a starch composition, using demineralized water which was acidified with sulfuric acid prior to contact with rice starch to pH 2.1 as aqueous medium. The resulting starch composition had a pH of 6.2 and contained 30 wt.% particles of thermally inhibited waxy rice starch expressed as percentage of dry matter of the thermally inhibited waxy rice starch based on total weight of the slurry.

The starch composition was subsequently dried on a drum dryer using conditions of 5.5 bar of steam and 5 rpm to form a pregelatinized starch having 5.0 wt.% moisture content.

The pregelatinized starch had a pH of 6.5 (determined on a 10 wt.% solution of the starch in demineralised water).

The viscosity properties were determined to be:

| | |
|---|---|
| 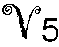 | 12,300 mPa.s |
| tan δ | 0.28 |

The results 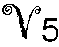 and tan δ show that the shear stability of Example 1 and Example 2, which have a pH of starch composition lower than 7.9, was considerably higher than for Comparative Example B.

### Comparative Experiment C

The properties of said another thermally inhibited waxy rice starch, which was the raw material as used in Comparative Experiment D and Example 3, 4 and 5 herein below, were measured without the starch having been subjected to any subsequent process step, such as slurrying.

The starch had 10.0 wt.% moisture content. The starch had a pH of 8.1 (determined on a 10 wt.% solution of the starch in demineralised water). The viscosity properties were determined to be:

| | |
|---|---|
| 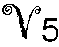 | 5600 mPa.s |
| tan δ | 0.50 |

### Comparative Experiment D

A sample of the thermally inhibited waxy rice starch as was used in Comparative Experiment C was used to form a slurry, using demineralized water as aqueous medium. The resulting slurry contained 36 wt.% particles of thermally inhibited rice starch expressed as percentage of dry matter of the thermally inhibited rice starch based on total weight of the slurry. The slurry had a pH of 8.2. The slurry was subsequently de-watered on a drum dryer (single drum-dryer of Andritz, type E5/5) using conditions of 6 bar of steam and 6 rpm to form a slurried-dried starch having 3.5 wt.% moisture content.

The viscosity properties were determined to be:

| | |
|---|---|
| 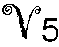 | 7,200 mPa.s |
| tan δ | 0.47 |

### Example 3

A sample of the thermally inhibited waxy rice starch as was used in Comparative Experiment C was used to form a starch composition, using demineralized water which was acidified with citric acid prior to contact with rice starch to pH 2.1 as aqueous medium. The resulting starch composition had a pH of 5.0 and contained 36 wt.% particles of thermally inhibited waxy rice starch expressed as percentage of dry matter of the thermally inhibited waxy rice starch based on total weight of the slurry.

The starch composition was subsequently dried on a drum dryer using conditions of 5.5 bar of steam and 5 rpm to form a pregelatinized starch having 5.0 wt.% moisture content.

The viscosity properties were determined to be:

| | |
|---|---|
| 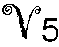 | 9,300 mPa.s |
| tan δ | 0.31 |

### Example 4

A sample of the thermally inhibited waxy rice starch as was used in Comparative Experiment C was used to form a starch composition, using demineralized water which was acidified with citric acid prior to contact with rice starch to pH 4.0 as aqueous medium. The resulting starch composition had a pH of 6.0 and contained 36 wt.% particles of thermally inhibited waxy rice starch expressed as percentage of dry matter of the thermally inhibited waxy rice starch based on total weight of the slurry.

The starch composition was subsequently dried on a drum dryer using conditions of 6 bar of steam and 6 rpm to form a pregelatinized starch having 2.3 wt.% moisture content.

The viscosity properties were determined to be:

| | |
|---|---|
| | 9,000 mPa.s |
| 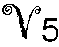 tan δ | 0.36 |

### Reference Example 5

A sample of the thermally inhibited waxy rice starch as was used in Comparative Experiment C was used to form a starch composition, using demineralized water which was acidified with citric acid prior to contact with rice starch to pH 4.3 as aqueous medium. The resulting starch composition had a pH of 7.0 and contained 36 wt.% particles of thermally inhibited waxy rice starch expressed as percentage of dry matter of the thermally inhibited waxy rice starch based on total weight of the slurry.

The starch composition was subsequently dried on a drum dryer using conditions of 6 bar of steam and 6 rpm to form a pregelatinized starch having 3.7 wt.% moisture content.

The viscosity properties were determined to be:

| | |
|---|---|
| ₅ | 8,800 mPa.s |
| tan δ | 0.41 |

The results ₅ and tan δ show that the shear stability of Example 3 and Example 4 and Example 5, which have a pH of starch composition lower than 7.9, was considerably higher than for Comparative Example D.

### Comparative Experiment E

The properties of the thermally inhibited waxy corn starch as such, which was the raw material as used in Comparative Experiment F and Example 6 and 7 herein below, were measured without the starch having been subjected to any subsequent process step, such as slurrying.

The starch had 10.2 wt.% moisture content. The starch had a pH of 7.2 (determined on a 10 wt.% solution of the starch in demineralised water). The viscosity properties were determined to be:

| | |
|---|---|
| ₅ | 13,500 mPa.s |
| tan δ | 0.44 |

### Comparative Experiment F

A sample of the thermally inhibited waxy corn starch as was used in Comparative Experiment E was used to form a slurry, using demineralized water as aqueous medium. The resulting slurry contained 36 wt.% particles of thermally inhibited waxy corn starch expressed as percentage of dry matter of the thermally inhibited corn starch based on total weight of the slurry. The slurry had a pH of 8.2. The slurry was subsequently de-watered on a drum dryer (single drum-dryer of Andritz, type E5/5) using conditions of 6 bar of steam and 6 rpm to form a slurried-dried starch having 2.9 wt.% moisture content.

The viscosity properties were determined to be:

| | |
|---|---|
| 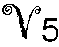 | 8,200 mPa.s |
| tan δ | 0.43 |

### Example 6

A sample of the thermally inhibited waxy corn starch as was used in Comparative Experiment E was used to form a starch composition, using demineralized water acidified with citric acid prior to contact with corn starch to pH 3.3 as aqueous medium. The resulting starch composition had a pH of 5.0 and contained 36 wt.% particles of thermally inhibited corn starch expressed as percentage of dry matter of the thermally inhibited corn starch based on total weight of the starch composition.

The starch composition was subsequently dried on a drum dryer using conditions of 5.5 bar of steam and 5 rpm to form a pregelatinized starch having 3.4 wt.% moisture content.

The viscosity properties were determined to be:

| | |
|---|---|
| 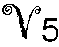 | 11,100 mPa.s |
| tan δ | 0.30 |

### Example 7

A sample of the thermally inhibited waxy corn starch as was used in Comparative Experiment E was used to form a starch composition, using demineralized water acidified with citric acid prior to contact with corn starch to pH 3.4 as aqueous medium. The resulting starch composition had a pH of 5.5 and contained 36 wt.% particles of thermally inhibited corn starch expressed as percentage of dry matter of the thermally inhibited corn starch based on total weight of the starch composition.

The starch composition was subsequently dried on a drum dryer using conditions of 5.5 bar of steam and 5 rpm to form a pregelatinized starch having 3.2 wt.% moisture content.

The viscosity properties were determined to be:

| | |
|---|---|
| 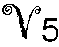 | 10,600 mPa.s |
| tan δ | 0.31 |

The results 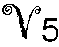 and tan δ show that the shear stability of Example 6 and Example 7, which have a pH of starch composition lower than 7.9, was considerably higher than for Comparative Example F.

### Comparative Experiment G

The properties of the chemically modified waxy rice starch as such, which was the raw material as used in Comparative Experiment H and Examples 8 - 9 herein below, were measured without the starch having been subjected to any subsequent process step, such as slurrying.

The starch had 12.8 wt.% moisture content. The starch had a pH of 6.3 (determined on a 10 wt.% solution of the starch in demineralised water). The viscosity properties were determined to be:

| | |
|---|---|
| 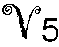 | 13,800 mPa.s |
| tan δ | 0.33 |
| 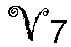 | 3,700 mPa.s |
| tan δ | 0.74 |

### Comparative Experiment H

A sample of the chemically modified waxy rice starch as was used in Comparative Experiment G was used to form a slurry, using demineralized water as aqueous medium. The resulting slurry contained 36 wt.% particles of chemically modified rice starch expressed as percentage of dry matter of the chemically modified rice starch based on total weight of the slurry. The slurry had a pH of 8.0. The slurry was subsequently de-watered on a drum dryer (single drum-dryer of Andritz, type E5/5) using conditions of 6 bar of steam and 6 rpm to form a slurried-dried starch having 3.1 wt.% moisture content.

The viscosity properties were determined to be:

| | |
|---|---|
| 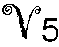 | 7,200 mPa.s |
| tan δ | 0.62 |
| 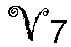 | 1,800 mPa.s |
| tan δ | 1.62 |

### Example 8

A sample of the chemically modified waxy rice starch as was used in Comparative Experiment G was used to form a starch composition, using demineralized water acidified with citric acid prior to contact with corn starch to pH 3.6 as aqueous medium. The resulting starch composition had a pH of 5.0 and contained 36 wt.% particles of chemically modified waxy rice starch expressed as percentage of dry matter of the chemically modified waxy rice starch based on total weight of the starch composition.

The starch composition was subsequently dried on a drum dryer using conditions of 6 bar of steam and 6 rpm to form a pregelatinized starch having 2.5 wt.% moisture content.

The viscosity properties were determined to be:

| | |
|---|---|
| 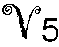 | 15,400 mPa.s |
| tan δ | 0.25 |
| 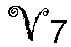 | 5,700 mPa.s |
| tan δ | 0.61 |

### Example 9

A sample of the chemically modified waxy rice starch as was used in Comparative Experiment G was used to form a starch composition, using demineralized water acidified with citric acid prior to contact with corn starch to pH 4.1 as aqueous medium. The resulting starch composition had a pH of 5.5 and contained 36 wt.% particles of chemically modified waxy rice starch expressed as percentage of dry matter of the chemically modified waxy rice starch based on total weight of the starch composition.

The starch composition was subsequently dried on a drum dryer using conditions of 5.5 bar of steam and 5 rpm to form a pregelatinized starch having 3.4 wt.% moisture content.

The viscosity properties were determined to be:

| | |
|---|---|
| 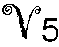 | 17,400 mPa.s |
| tan δ | 0.25 |
| 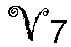 | 5,100 mPa.s |
| tan δ | 0.65 |

The results 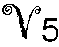 and tan δ at 5000 rpm and 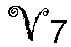 and tan δ at 7000 rpm show that the shear stability of Example 8 and Example 9, which have a pH of starch composition lower than 7.9, was considerably higher than for Comparative Example H.

### Comparative Experiment I

The properties of the thermally inhibited waxy rice flour as such, which was the raw material as used in Comparative Experiment J and Example 10 herein below, were measured without the flour having been subjected to any subsequent process step, such as slurrying.

The flour had 0.12 wt.% moisture content. The flour had a pH of 8.0 (determined on a 10 wt.% solution of the flour in demineralised water). The viscosity properties were determined to be:

| | |
|---|---|
| 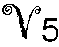 | 21,800 mPa.s |
| tan δ | 0.50 |
| 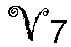 | 4,700 mPa.s |
| tan δ | 1.22 |

### Comparative Experiment J

A sample of the thermally inhibited waxy rice flour as was used in Comparative Experiment I was used to form a slurry, using demineralized water as aqueous medium. The resulting slurry contained 29 wt.% particles of thermally inhibited waxy rice flour expressed as percentage of dry matter of the thermally inhibited waxy rice flour based on total weight of the slurry. The slurry had a pH of 8.0. The slurry was subsequently de-watered on a drum dryer (single drum-dryer of Andritz, type E5/5) using conditions of 6 bar of steam and 6 rpm to form a slurried-dried flour having 5.0 wt.% moisture content.

The viscosity properties were determined to be:

| | |
|---|---|
| 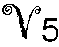 | 12,500 mPa.s |
| tan δ | 0.67 |
| 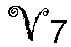 | 7,300 mPa.s |
| tan δ | 1.01 |

### Example 10

A sample of the thermally inhibited waxy rice flour as was used in Comparative Experiment I was used to form a flour composition, using demineralized water acidified with citric acid prior to contact with corn flour to pH 3.2 as aqueous medium. The resulting flour composition had a pH of 5.0 and contained 29 wt.% particles of thermally inhibited waxy rice flour expressed as percentage of dry matter of the thermally inhibited waxy rice flour based on total weight of the flour composition.

The flour composition was subsequently dried on a drum dryer using conditions of 5.8 bar of steam and 10 rpm to form a pregelatinized flour having 5.1 wt.% moisture content.

The viscosity properties were determined to be:

| | |
|---|---|
| 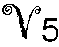 | 16,800 mPa.s |
| tan δ | 0.49 |
| 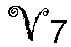 | 7,900 mPa.s |
| tan δ | 0.86 |

The results 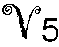 and tan δ at 5000 rpm and 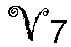 and tan δ at 7000 rpm show that the shear stability of Example 10, which has a pH of starch composition lower than 7.9, was considerably higher than for Comparative Example J.

## Claims

1. Process for the preparation of pregelatinized starch and/or pregelatinized flour, comprising the steps of:
• Providing an aqueous medium having a pH in the range of -1.0 to 7.5;
• Mixing starch and/or flour with the aqueous medium in a mixing step to form a starch composition having a pH in the range between 4.0 and 6.5, wherein the starch composition has the aqueous medium as continuous phase and contains between 20 and 60 wt.%, preferably between 30 and 50 wt.%, expressed as percentage of dry matter on total weight of the starch composition, of particles of starch and/or flour; and
• Pregelatinizing the starch composition in a pregelatinization step, wherein said composition is heated using a drum dryer, while rotating the drum, to form the pregelatinized starch and/or pregelatinized flour; wherein during the pregelatinization step the starch composition is dried using the drum dryer;
• Allowing the pregelatinized starch and/or pregelatinized flour to cool to a temperature of at most 80°C; and
• Storing the obtained pregelatinized starch and/or pregelatinized flour at a temperature of at most 60°C, preferably at a temperature in the range between -10 °C and +50°C.

2. Process according to claim 1, wherein the process comprises at least one of a physical modification step and a chemical modification step prior to the mixing step wherein the starch and/or flour is physically modified or chemically modified and wherein the starch and/or flour used in the mixing step is the physically modified starch and/or flour or the chemically modified starch and/or flour.

3. Process according to claim 2, wherein the process comprises a physical modification step prior to the mixing step, wherein the physical modification step is a thermal inhibition step for thermally inhibiting a starch and/or flour and wherein the starch and/or flour used in the mixing step is the thermally inhibited starch and / or thermally inhibited flour.

4. Process according to claim 2, wherein the process comprises a chemical modification step for chemically modifying a starch and/or flour prior to the mixing step, wherein the starch and/or flour used in the mixing step is the chemically modified starch and / or chemically modified flour.

5. Process according to any one of the preceding claims, wherein the starch and/or flour is derived from a waxy starch and/or waxy flour.

6. Process according to any one of the preceding claims, wherein the starch and/or flour is selected from maize (*i.e. corn*), wheat, rice, sorghum, barley, rye, and any mixtures thereof.

7. Process according to any one of the preceding claims, wherein the starch and/or flour is derived from rice, preferably a waxy rice.

8. Process according to any one of preceding claims, wherein the pregelatinizing step is performed such that the obtained pregelatinized starch and/or pregelatinized flour has a moisture content lying between 0 wt.% and 30 wt.%, preferably between 2 wt.% and 20 wt.%, more preferably between 3 and 15 wt.%

9. Process according to any one of preceding claims, wherein:
• in the mixing step, the pH of the starch composition is brought to a value between 4.0 and 6.5 within 90 minutes, preferably within 15 minutes, more preferably within 10 minutes after the mixing of the starch and/or flour with the aqueous medium.

10. Process according to any one of preceding claims, wherein in the pregelatinization step, said composition is heated using a drum dryer by the application of steam to the drum dryer.

11. Process according to any one of the preceding claims, wherein in the mixing step the starch and/or flour is the largest dry matter constituent.

## Patentansprüche

1. Verfahren zur Herstellung von vorgelatinierter Stärke und/oder vorgelatiniertem Mehl, umfassend die Schritte:
• Bereitstellen eines wässrigen Mediums mit einem pH-Wert in dem Bereich von -1,0 bis 7,5;
• Mischen von Stärke und/oder Mehl mit dem wässrigen Medium in einem Mischschritt, um eine Stärkezusammensetzung mit einem pH-Wert in dem Bereich zwischen 4,0 und 6,5 zu bilden, wobei die Stärkezusammensetzung das wässrige Medium als kontinuierliche Phase aufweist und zwischen 20 und 60 Gew.-%, vorzugsweise zwischen 30 und 50 Gew.-%, ausgedrückt als Prozent Trockenmasse bezogen auf das Gesamtgewicht der Stärkezusammensetzung, an Partikeln von Stärke uud/oder Mehl enthält; und
• Vorgelatinieren der Stärkezusammensetzung in einem Vorgelatinierungsschritt, wobei die Zusammensetzung unter Verwendung eines Trommeltrockners unter Drehen Trommel erhitzt wird, um die vorgelatinierte Stärke und/oder das vorgelatinierte Mehl zu bilden; wobei während des Vorgelatinierungsschritts die Stärkezusammensetzung unter Verwendung des Trommeltrockners getrocknet wird;
• Abkühlen der vorgelatinierten Stärke und/oder des vorgelatinierten Mehls auf eine Temperatur von höchstens 80 °C; und
• Lagern der/des erhaltenen vorgelatinierten Stärke und/oder vorgelatinierten Mehls bei einer Temperatur von höchstens 60°C, vorzugsweise bei einer Temperatur in dem Bereich zwischen -10°C und +50 °C.

2. Verfahren nach Anspruch 1, wobei das Verfahren vor dem Mischschritt wenigstens eines von einem physikalischen Modifikationsschritt und einem chemischen Modifikationsschritt umfasst, wobei die Stärke und/oder das Mehl physikalisch modifiziert oder chemisch modifiziert wird und wobei die/das bei dem Mischschritt verwendete Stärke und/oder Mehl die/das physikalisch modifizierte Stärke und/oder Mehl oder die/das chemisch modifizierte Stärke und/oder Mehl ist.

3. Verfahren nach Anspruch 2, wobei das Verfahren vor dem Mischschritt einen physikalischen Modifikationsschritt umfasst, wobei der physikalische Modifikationsschritt ein thermischer Inhibitionsschritt zum thermischen Inhibieren einer Stärke und/oder eines Mehls ist und wobei die/das bei dem Mischschritt verwendete Stärke und/oder Mehl die thermisch inhibierte Stärke und/oder das thermisch inhibierte Mehl ist.

4. Verfahren nach Anspruch 2, wobei das Verfahren vor dem Mischschritt einen chemischen Modifikationsschritt zur chemischen Modifizierung einer Stärke und/oder eines Mehls umfasst, wobei die/das bei dem Mischschritt verwendete Stärke und/oder Mehl die chemisch modifizierte Stärke und/oder das chemisch modifizierte Mehl ist.

5. Verfahren nach einem der vorstehenden Ansprüche, wobei die Stärke und/oder das Mehl von einer Wachsstärke und/oder einem Wachsmehl abgeleitet ist.

6. Verfahren nach einem der vorstehenden Ansprüche, wobei die Stärke und/oder das Mehl ausgewählt ist aus aus Mais (d.h. Maiskorn), Weizen, Reis, Hirse, Gerste, Roggen und beliebigen Gemischen davon.

7. Verfahren nach einem der vorstehenden Ansprüche, wobei die Stärke und/oder das Mehl von Reis, vorzugsweise einem Wachsreis, abgeleitet ist.

8. Verfahren nach einem der vorstehenden Ansprüche, wobei der Vorgelatinierungsschritt so durchgeführt wird, dass die erhaltene vorgelatinierte Stärke und/oder das vorgelatinierte Mehl einen Feuchtigkeitsgehalt aufweist, der zwischen 0 Gew.-% und 30 Gew.-%, vorzugsweise zwischen 2 Gew.-% und 20 Gew.-%, bevorzugter zwischen 3 und 15 Gew.-%, liegt.

9. Verfahren nach einem der vorstehenden Ansprüche, wobei:
• bei dem Mischschritt der pH-Wert der Stärkezusammensetzung innerhalb von 90 Minuten, vorzugsweise innerhalb von 15 Minuten, bevorzugter innerhalb von 10 Minuten, nach dem Mischen der Stärke und/oder des Mehls mit dem wässrigen Medium auf einen Wert zwischen 4,0 und 6,5 gebracht wird.

10. Verfahren nach einem der vorstehenden Ansprüche, wobei bei dem Vorgelatinierungsschritt die Zusammensetzung unter Verwendung eines Trommeltrockners durch Anlegen von Dampf an den Trommeltrockner erhitzt wird.

11. Verfahren nach einem der vorstehenden Ansprüche, wobei bei dem Mischschritt die Stärke und/oder das Mehl der größte Trockenmassebestandteil ist.

## Revendications

1. Procédé de préparation d'amidon prégélatinisé et/ou de farine prégélatinisée, comprenant les étapes de :
• fourniture d'un milieu aqueux ayant un pH dans la plage de -1,0 à 7,5 ;
• mélange de l'amidon et/ou de la farine avec le milieu aqueux dans une étape de mélange pour former une composition d'amidon ayant un pH dans la plage de 4,0 et 6,5, dans lequel la composition d'amidon a le milieu aqueux comme phase continue et contient entre 20 et 60 % en poids, de préférence entre 30 et 50 % en poids, exprimé en pourcentage de matière sèche par rapport au poids total de la composition d'amidon, de particules d'amidon et/ou de farine ; et
• prégélatinisation de la composition d'amidon dans une étape de prégélatinisation, dans lequel ladite composition est chauffée à l'aide d'un séchoir à tambour, tout en faisant tourner le tambour, pour former l'amidon prégélatinisé et/ou la farine prégélatinisée ; dans lequel, pendant l'étape de prégélatinisation, la composition d'amidon est séchée en utilisant le séchoir à tambour ;
• laisser refroidir l'amidon prégélatinisé et/ou la farine prégélatinisée jusqu'à une température d'au plus 80 °C ; et
• stockage de l'amidon prégélatinisé et/ou de la farine prégélatinisée obtenu(e) à une température d'au plus 60 °C, de préférence à une température dans la plage comprise entre -10 °C et +50 °C.

2. Procédé selon la revendication 1, dans lequel le procédé comprend au moins une étape parmi une étape de modification physique et une étape de modification chimique préalable à l'étape de mélange, dans lequel l'amidon et/ou la farine sont modifiés physiquement ou chimiquement et dans lequel l'amidon et/ou la farine utilisé(e) dans l'étape de mélange est l'amidon et/ou la farine modifié(e) physiquement ou l'amidon et/ou la farine modifié(e) chimiquement.

3. Procédé selon la revendication 2, dans lequel le procédé comprend une étape de modification physique préalable à l'étape de mélange, dans lequel l'étape de modification physique est une étape d'inhibition thermique pour l'inhibition thermique d'un amidon et/ou d'une farine et dans lequel l'amidon et/ou la farine utilisé(e) à l'étape de mélange est l'amidon inhibé thermiquement et/ou la farine inhibée thermiquement.

4. Procédé selon la revendication 2, dans lequel le procédé comprend une étape de modification chimique pour modifier chimiquement un amidon et/ou une farine préalablement à l'étape de mélange, dans lequel l'amidon et/ou la farine utilisé(e) à l'étape de mélange est l'amidon chimiquement modifié et/ou la farine chimiquement modifiée.

5. Procédé selon l'une quelconque des revendications précédentes, dans lequel l'amidon et/ou la farine est issu(e) d'un amidon cireux et/ou de farine cireuse.

6. Procédé selon l'une quelconque des revendications précédentes, dans lequel l'amidon et/ou la farine est choisi(e) parmi le maïs (c'est-à-dire maïs), le blé, le riz, le sorgho, l'orge, le seigle, et leurs mélanges quelconques.

7. Procédé selon l'une quelconque des revendications précédentes, dans lequel l'amidon et/ou la farine est issu(e) de riz, de préférence un riz cireux.

8. Procédé selon l'une quelconque des revendications précédentes, dans lequel l'étape de prégélatinisation est réalisée de telle sorte que l'amidon prégélatinisé et/ou la farine prégélatinisée obtenu(e) ait une teneur en humidité comprise entre 0 % en poids et 30 % en poids, de préférence entre 2 % en poids et 20 % en poids, plus préférablement entre 3 et 15 % en poids.

9. Procédé selon l'une quelconque des revendications précédentes, dans lequel :
• à l'étape de mélange, le pH de la composition d'amidon est porté jusqu'à une valeur comprise entre 4,0 et 6,5 dans les 90 minutes, de préférence dans les 15 minutes, plus préférablement dans les 10 minutes suivant le mélange de l'amidon et/ou de la farine avec le milieu aqueux.

10. Procédé selon l'une quelconque des revendications précédentes, dans lequel dans l'étape de prégélatinisation, ladite composition est chauffée à l'aide d'un séchoir à tambour par application de vapeur au séchoir à tambour.

11. Procédé selon l'une quelconque des revendications précédentes, dans lequel dans l'étape de mélange l'amidon et/ou la farine est le plus grand constituant de matière sèche.
